# EUROPEAN PATENT APPLICATION

(11) **EP 4 541 599 A1**
(43) Date of publication of application: **23.04.2025**
(21) Application number: 24198390.7
(22) Date of filing: 04.09.2024
(51) Int. Cl.: B41M 5/52, B64C 1/06, B41M 7/00

(54) **SYSTEMS AND METHODS FOR PRINTING ON A SUBSTRATE**

(30) Priority: 09.10.2023 US 202318483017
(71) Applicant: The Boeing Company, Arlington, VA 22202 (US)
(72) Inventor: METTING, Stephanie, Arlington, 22202 (US); DREXLER, Jason, Arlington, 22202 (US)
(74) Representative: St Clair Jones, Gregory Arthur Langley

(57) **Abstract**

A substrate for receiving a print layer includes a reinforcement layer having a first surface and optionally a second surface opposite from the first surface. A first coating layer is coupled to the first surface of the reinforcement layer. The first coating layer is configured to receive and retain the print layer. The substrate is configured to be secured to a component.

## Description

### FIELD OF THE DISCLOSURE

Examples of the present disclosure generally relate to systems and methods for printing on a substrate, such as in relation to surfaces of an internal cabin of a commercial aircraft.

### BACKGROUND OF THE DISCLOSURE

Vehicles such as commercial aircraft include internal cabins having various components. For example, an internal cabin includes a floor, sidewalls, and a ceiling. The components may include text, graphics, and/or textures.

However, known substrates that may be used for printed textures inside internal cabin of commercial aircraft are limited due to strict regulatory and performance-based requirements. In particular, printing on such substrates poses numerous drawbacks in terms of adhesion of ink, flammability, handling characteristics, surface finish, repairability, and weight.

### SUMMARY OF THE DISCLOSURE

A need exists for an improved substrate configured for printed textured surfaces. Further, a need exists for a system and a method for efficiently and effectively printing textured surfaces used within an internal cabin of a vehicle, such as a commercial aircraft.

With those needs in mind, certain examples of the present disclosure provide a substrate for receiving a print layer. The substrate includes a reinforcement layer having a first surface and a second surface opposite from the first surface. A first coating layer is coupled to the first surface of the reinforcement layer. The first coating layer is configured to receive and retain the print layer. The substrate is configured to be secured to a component.

The substrate can also include a second coating layer coupled to the second surface of the reinforcement layer, such as to balance internal stress of the system and improve handling characteristics.

In at least one example, the component is within an internal cabin of an aircraft.

In at least one example, the first coating layer is a flame-retardant, ink-receptive coating. The first coating layer can include an intumescent material.

The reinforcement layer can include fibers. The reinforcement layer can be inert and/or flame-retardant. The reinforcement layer can be formed of fiberglass, Kevlar, carbon, Nomex, or other flame retardant materials. The reinforcement layer can include a metal mesh.

In at least one example, the print layer includes ink configured to be cured by ultraviolet (UV) light. The print layer can include a printed textured surface.

The print layer can be applied to the substrate before the substrate is secured to the component. Optionally, the print layer can be applied to the substrate after the substrate is secured to the component.

Certain examples of the present disclosure provide a method including coupling a first coating layer to a first surface of a reinforcement layer to form a substrate; applying a print layer to the first coating layer; and securing the substrate to a component.

Certain examples of the present disclosure provide a vehicle, such as an aircraft, including an internal cabin, a component within the internal cabin, and a substrate coupled to the component, as described herein.

### BRIEF DESCRIPTION OF THE DRAWINGS

Figure 1 illustrates a block diagram of a substrate for printing textured surfaces, according to an example of the present disclosure.
Figure 2 illustrates an isometric exploded view of a substrate for a print layer, according to an example of the present disclosure.
Figure 3 illustrates a perspective front view of an aircraft, according to an example of the present disclosure.
Figure 4 illustrates a perspective internal view of an internal cabin of a vehicle, according to an example of the present disclosure.
Figure 5 illustrates a simplified block diagram of a system, according to an example of the present disclosure.
Figure 6 illustrates a flow chart of a method, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

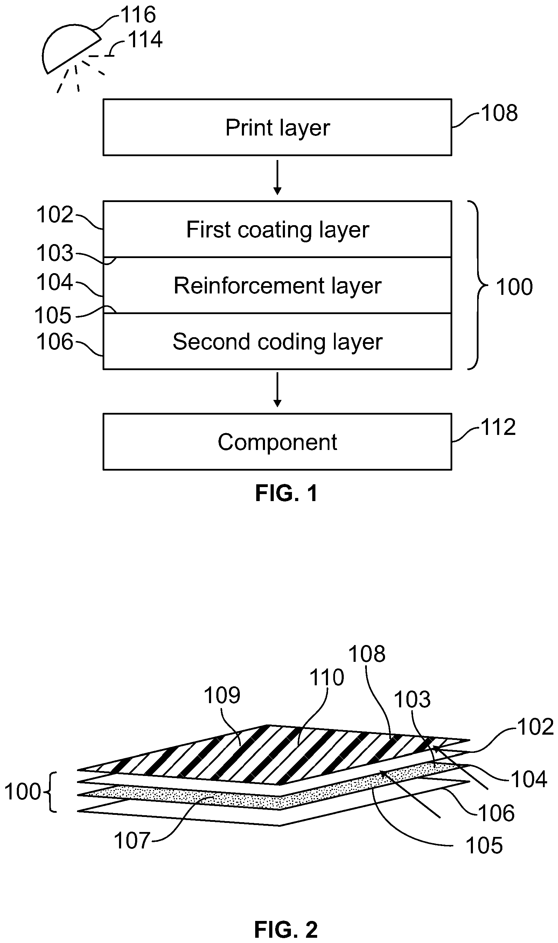

Figure 1 illustrates a block diagram of a substrate 100 for printing textured surfaces, according to an example of the present disclosure. Figure 2 illustrates an isometric exploded view of the substrate 100, according to an example of the present disclosure. Referring to Figures 1 and 2, the substrate 100 includes a first coating layer 102 coupled to a first surface 103 of a reinforcement layer 104. In at least one example, the first coating layer 102 is directly secured (that is, without intervening structure) to the first surface 103.

In at least one example, the substrate 100 also includes a second coating layer 106 coupled to a second surface 105 of the reinforcement layer 104. The first surface 103 is opposite from the second surface 105. In at least one example, the second coating layer 106 is directly secured to the second surface 105.

In at least one example, the first surface 103 is a front surface, and the second surface 105 is a rear surface. As another example, the first surface 103 is a top surface and the second surface 105 is a bottom surface.

In at least one example, the first coating layer 102 is an ink-receptive coating. The first coating layer 102 can be formed of a phenolic material, which can be or otherwise include a thermosetting resin or plastic. In at least one example, the first coating layer 102 is bonded to the first surface 103 of the reinforcement layer 104 through one or more resins. The first coating layer 102 is flame-retardant. For example, the first coating layer 102 can be a flame-retardant urethane. In at least one example, the first coating layer 102 can be formed of or otherwise include an intumescent material. In at least one example, the first coating layer 102 provides a flat, smooth surface that is bonded to the reinforcement layer 104.

The reinforcement layer 104 includes a textured surface. In at least one example, the reinforcement layer 104 includes fibers 107, such as carbon-based fibers. As a further example, the fibers 107 are flame-retardant. The reinforcement layer 104 can be formed of woven or knitted fiberglass, a metal (such as steel) mesh, a carbon-based material, one or more aramids, and/or the like.

In at least one example, the second coating layer 106 provides additional structural support to the substrate 100. The second coating layer 106 can also be an ink-receptive coating. The second coating layer 106 can be formed of a phenolic material, which can be or otherwise include a thermosetting resin or plastic. In at least one example, the second coating layer 106 is bonded to the second surface 105 of the reinforcement layer 104 through one or more resins. The second coating layer 106 is flame-retardant. For example, the second coating layer 106 can be a flame-retardant urethane. In at least one example, the second coating layer 106 can be formed of or otherwise include an intumescent material. In at least one example, the second coating layer 106 provides a flat, smooth surface that is bonded to the reinforcement layer 104.

The substrate 100 is configured to receive a print layer 108. For example, the first coating layer 102 receives and retains the print layer 108. The print layer 108 can be provided by a digital printer, such as a digital inkjet printer, a screen printer, a laser printer, and/or the like. The print layer 108 includes ink 109 that is applied directly onto the first coating layer 102, which is configured to receive and retain the print layer 108. In at least one example, the print layer 108 includes a printed textured surface 110. It has been found that the substrate 100 effectively and efficiently receives and retains the print layer 108.

In at least one example, the first coating layer 102 is an ink receptive coating that includes an adhesive that is configured to bond with the ink 109 of the print layer 108. Similarly, the second coating layer 106 can be an ink receptive coating that includes an adhesive that is configured to bond with the ink 109 of the print layer 108. The first coating layer 102 and/or the second coating layer 106 can be a color that hides scratches on the surface. As another example, the first coating layer 102 and/or the second coating layer 106 can be white to provide a background that allows for improved color management of printed inks.

The substrate 100 is configured to be secured to a component 112. For example, the substrate 100 is securely bonded to a surface of the component 112, such as through one or more adhesives. As an example, the reinforcement layer 104 and/or the second coating layer 106 is directly secured to the surface of the component 112. For example, the reinforcement layer 104 and/or the second coating layer 106 can be bonded with a fire-retardant film adhesive to the surface of the component 112.

The component 112 can be a structure within an internal cabin of a vehicle. For example, the component 112 can be a wall, ceiling, floor, drape, surface of a monument, and/or the like within an internal cabin of a commercial aircraft. The component 112 can be formed of a flame retardant material.

In at least one example, the print layer 108 is applied to the substrate 100 before the substrate 100 is secured to the component 112. Optionally, the substrate 100 can be secured to the component 112, and the print layer 108 is subsequently applied to the substrate 100.

The substrate 100 is configured to receive the print layer 108, which can be a digitally printed texture, and used to provide a decorative laminate on the component 112. In at least one example, after being applied to the substrate, the print layer 108 can be cured with ultraviolet (UV) light 114 emitted by one or more UV light emitters 116. The ink 109 of the print layer 108 can be a UV curable ink. It has been found that the UV curable ink can be used to provide the printed texture surface 110.

In general, UV curable inks typically do not bond well with forms that are typically used in an internal cabin of a commercial aircraft. The substrate 100 provides one or more coating layers, such as the first coating layer 102 and the second coating layer 106, which are configured to effectively bond with the UV curable ink of the print layer 108.

It has been found that the substrate 100 including the first coating layer 102 secured to the reinforcement layer 104 is well-suited for receiving the print layer 108, which can be used to provide a decorative surface within an internal cabin of a commercial aircraft.

The substrate 100 provides sufficient strength to allow application over the component 112, which can include complex contours (such as if the substrate 100 is flexible). Because the substrate 100 is separately applied to the component 112, the substrate 100 or portions thereof can be quickly and easily removed for repair or replacement.

The substrate 100 provides a composite material that provides improved adhesion with ink (via a tailored functional surface), repairability (such as due to the reinforcement layer 104), an improved white-point for an ink receptive surface, and resilience and strength (such as due to the reinforcement layer). Further, a color of the substrate 100 can be tailored for aesthetics.

As described herein, the substrate 100 is configured to receive and retain the print layer 108. The substrate 100 includes the reinforcement layer 104 having the first surface 103 and the second surface 105 opposite from the first surface 103. The first coating layer 102 is coupled to the first surface 103 of the reinforcement layer 104. The first coating layer 102 receives and retains the print layer 108. The substrate 100 is configured to be secured to the component 112. In at least one example, the substrate 100 also includes the second coating layer 106 coupled to the second surface 105 of the reinforcement layer 104. In at least one example, the component 112 is within an internal cabin of an aircraft.

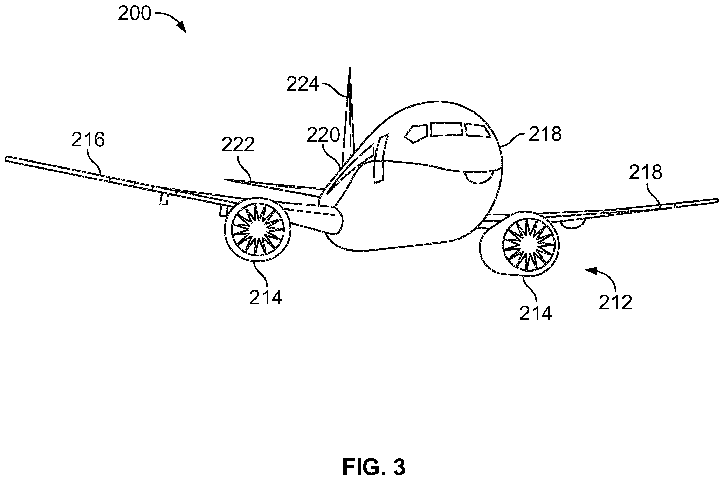

Figure 3 illustrates a perspective front view of an aircraft 200, according to an example of the present disclosure. The aircraft 200 includes a propulsion system 212 that may include two turbofan engines 214, for example. Optionally, the propulsion system 212 may include more engines 214 than shown. The engines 214 are carried by wings 216 of the aircraft 200. In other examples, the engines 214 may be carried by a fuselage 218 and/or an empennage 220. The empennage 220 may also support horizontal stabilizers 222 and a vertical stabilizer 224.

The fuselage 218 of the aircraft 200 defines an internal cabin, which may be defined by interior sidewall panels that connect to a ceiling and a floor. The internal cabin may include a cockpit, one or more work sections (for example, galleys, personnel carry-on baggage areas, and the like), one or more passenger sections (for example, first class, business class, and coach sections), and an aft section. The internal cabin includes one or more components 112 (shown in Figure 1).

Optionally, instead of an aircraft, examples of the present disclosure may be used with various other vehicles, such as automobiles, buses, locomotives and train cars, watercraft, spacecraft, and the like. Optionally, examples of the present disclosure can be used in relation to buildings, articles of manufacture, or the like.

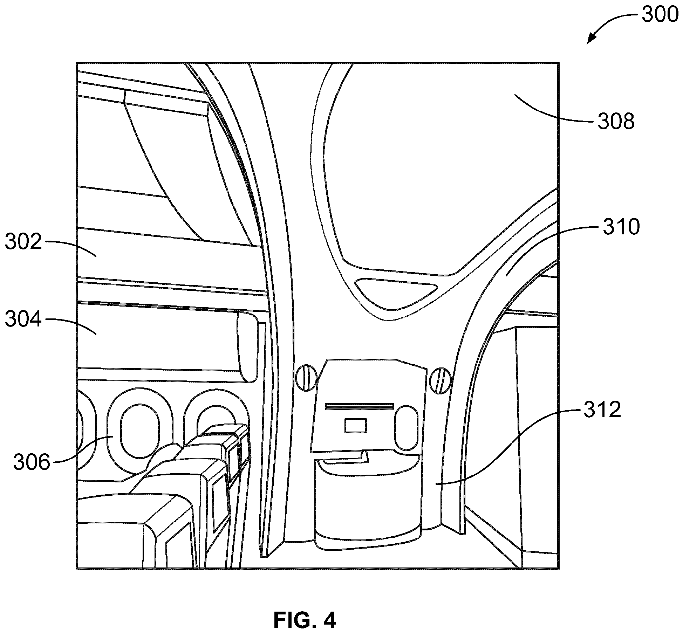

Figure 4 illustrates a perspective internal view of an internal cabin 300 of a vehicle, (such as the aircraft 200 shown in Figure 3) according to an example of the present disclosure. The internal cabin 300 includes numerous components 112 (shown in Figure 1). For example, substrates 100 that retain print layers 108 can be coupled to ceiling panels 302, stowage bin assemblies 304, sidewall panels 306, ceiling coves 308, doorway arch panels 310, doorway side panels 312, partitions, closets, lavatory walls, light valences, and/or the like within the internal cabin.

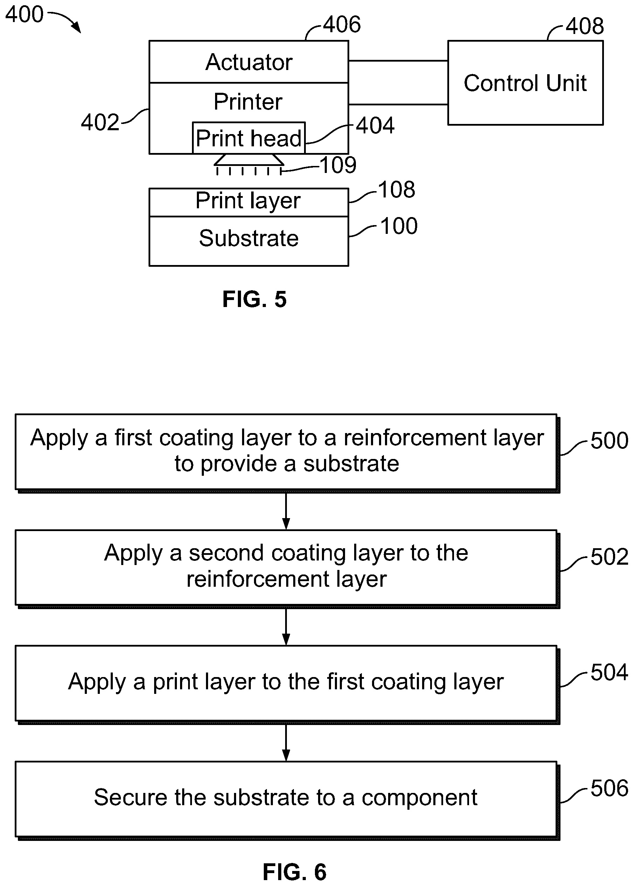

Figure 5 illustrates a simplified block diagram of a system 400, according to an example of the present disclosure. The system 400 is configured to print one or more textured surfaces via a print layer 108 applied to a substrate 100. The substrate 100 can be secured to a component 112 (shown in Figure 1, for example) before or after the print layer 108 is applied to the substrate 100. As an example, the component 112 is within an internal cabin of the vehicle, such as a wall, ceiling, floor, or the like within the vehicle. The component 112 can be flat and planar. As another example, the component 112 can include one more curves, such as can have a regular or irregular curvature.

The system 400 includes a printer 402 having a print head 404, which can include one or more nozzles configured to deposit ink 109 onto the substrate 100 to form the print layer 108. In at least one example, the print head 404 includes a single nozzle. As another example, the print head 404 includes two, three, four, five, or more nozzles. For example, the print head 404 can have hundreds or thousands of nozzles.

The printer 402 can be coupled to an actuator 406, which is configured to move the print head 404. In at least one example, the print head 404 includes a single axis servo motor having a linear actuator. The actuator 406 is configured to move the print head 404 over one or more passes in relation to a surface of the substrate 100. The actuator 406 can be separate and distinct from the printer 402. As another example, the printer 402 includes the actuator 406.

A control unit 408 is in communication with the printer 402 and the actuator 406, such as through one or more wired or wireless connections. The control unit 408 is configured to operate the actuator 406 and the printer 402 to form the textured surfaces via the print layer 108 on the substrate 100 based on data stored within a memory that is in communication with the control unit 408, such as through one or more wired or wireless connections. For example, the data can be a bit map of the textured surfaces to be formed on the substrate 100. The memory can be separate and distinct from the control unit 408. As another example, the control unit 408 includes the memory.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 408 may be or include one or more processors that are configured to control operation, as described herein.

The control unit 408 is configured to execute a set of instructions that are stored in one or more data storage units or elements (such as one or more memories), in order to process data. For example, the control unit 408 may include or be coupled to one or more memories. The data storage units may also store data or other information as desired or needed. The data storage units may be in the form of an information source or a physical memory element within a processing machine.

The set of instructions may include various commands that instruct the control unit 408 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 408. It is to be understood that the processing or control units may represent circuits, circuitry, or portions thereof that may be implemented as hardware with associated instructions (e.g., software stored on a (optionally tangible and optionally non-transitory) computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 408 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Figure 6 illustrates a flow chart of a method, according to an example of the present disclosure. Referring to Figures 1 and 6, at 500, the first coating layer 102 is applied to the reinforcement layer 104 to provide the substrate 100. Next, at 502, the second coating layer 106 is applied to the reinforcement layer 104 to further define the substrate 100. Optionally, the method may not include 502.

At 504, the print layer 108 is applied to the first coating layer 504, such as via a digital printer. At 506, the substrate 100 is then secured to the component 112. Optionally, the substrate 100 can be secured to the component before 504. That is, 506 can optionally occur before 504.

Further, the disclosure comprises examples according to the following clauses:
Clause 1. A substrate for receiving a print layer, the substrate comprising:
   a reinforcement layer having a first surface and a second surface opposite from the first surface; and
   a first coating layer coupled to the first surface of the reinforcement layer,
   wherein the first coating layer is configured to receive and retain the print layer, and
   wherein the substrate is configured to be secured to a component.
Clause 2. The substrate of claim 1, further comprising a second coating layer coupled to the second surface of the reinforcement layer.
Clause 3. The substrate of Clauses 1 or 2, wherein the component is within an internal cabin of an aircraft.
Clause 4. The substrate of any of Clauses 1-3, wherein the first coating layer is a flame-retardant, ink-receptive coating.
Clause 5. The substrate of any of Clauses 1-4, wherein the first coating layer comprises an intumescent material.
Clause 6. The substrate of any of Clauses 1-5, wherein the reinforcement layer comprises fibers.
Clause 7. The substrate of any of Clauses 1-6, wherein the reinforcement layer is flame-retardant.
Clause 8. The substrate of any of Clauses 1-7, wherein the reinforcement layer is formed of fiberglass.
Clause 9. The substrate of any of Clauses 1-8, wherein the reinforcement layer comprises a metal mesh.
Clause 10. The substrate of any of Clauses 1-9, wherein the print layer comprises ink configured to be cured by ultraviolet (UV) light.
Clause 11. The substrate of any of Clauses 1-10, wherein the print layer comprises a printed textured surface.
Clause 12. The substrate of any of Clauses 1-11, wherein the print layer is applied to the substrate before the substrate is secured to the component.
Clause 13. The substrate of any of Clauses 1-11, wherein the print layer is applied to the substrate after the substrate is secured to the component.
Clause 14. A method comprising:
   coupling a first coating layer to a first surface of a reinforcement layer to form a substrate;
   applying a print layer to the first coating layer; and
   securing the substrate to a component.
Clause 15. The method of Clause 14, further comprising coupling a second coating layer coupled to a second surface of the reinforcement layer, wherein the second surface is opposite from the first surface.
Clause 16. The method of Clauses 14 or 15, wherein the component is within an internal cabin of an aircraft.
Clause 17. The method of any of Clauses 14-16, wherein the first coating layer is a flame-retardant, ink-receptive coating, wherein the reinforcement layer comprises fibers, and wherein the reinforcement layer is flame-retardant.
Clause 18. The method of any of Clauses 14-17, wherein the first coating layer comprises an intumescent material.
Clause 19. The method of any of Clauses 14-18, further comprising curing ink of the print layer comprises ink with ultraviolet (UV) light.
Clause 20. An aircraft comprising:
   an internal cabin;
   a component within the internal cabin;
   a substrate coupled to the component, the substrate comprising:
      a reinforcement layer having a first surface and a second surface opposite from the first surface, wherein the reinforcement layer comprises fibers, and wherein the reinforcement layer is flame-retardant;
      a first coating layer coupled to the first surface of the reinforcement layer, wherein the first coating layer is a first flame-retardant, ink-receptive coating; and
      a second coating layer coupled to the second surface of the reinforcement layer, wherein the second coating layer is a second flame-retardant, ink-receptive coating; and
   a print layer coupled to the first coating layer, wherein the print layer comprises ink cured by ultraviolet (UV) light, and wherein the print layer comprises a printed textured surface.

As described herein, examples of the present disclosure provide improved substrates configured for printed textured surfaces. Further, examples of the present disclosure provide systems and methods for efficiently and effectively printing textured surfaces for used within an internal cabin of a vehicle, such as a commercial aircraft.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A substrate (100) for receiving a print layer (108), the substrate (100) comprising:
a reinforcement layer (104) having a first surface (103) and a second surface (105) opposite from the first surface (103); and
a first coating layer (102) coupled to the first surface (103) of the reinforcement layer (104),
wherein the first coating layer (102) is configured to receive and retain the print layer (108), and
wherein the substrate (100) is configured to be secured to a component (112).

2. The substrate (100) of claim 1, further comprising a second coating layer (106) coupled to the second surface (105) of the reinforcement layer (104).

3. The substrate (100) of claim 1 or claim 2, wherein the component (112) is within an internal cabin of an aircraft.

4. The substrate (100) of any of claims 1 to 3, wherein the first coating layer (102) is a flame-retardant, ink-receptive coating.

5. The substrate (100) of any of claims 1 to 4, wherein the first coating layer (102) comprises an intumescent material.

6. The substrate (100) of any of claims 1 to 5, wherein the reinforcement layer (104) comprises fibers (107).

7. The substrate (100) of any of claims 1 to 6, wherein the reinforcement layer (104) is flame-retardant, and/or,
wherein the reinforcement layer (104) is formed of fiberglass, and/or,
wherein the reinforcement layer (104) comprises a metal mesh, and/or,
wherein the print layer (108) comprises ink (109) configured to be cured by ultraviolet (UV) light (114).

8. The substrate (100) of any of claims 1 to 7, wherein the print layer (108) comprises a printed textured surface (110).

9. The substrate (100) of any of claims 1 to 8, wherein the print layer (108) is applied to the substrate (100) before the substrate (100) is secured to the component (112).

10. The substrate (100) of any of claims 1 to 9, wherein the print layer (108) is applied to the substrate (100) after the substrate (100) is secured to the component (112).

11. A method comprising:
coupling a first coating layer (102) to a first surface (103) of a reinforcement layer (104) to form a substrate (100);
applying a print layer (108) to the first coating layer (102); and
securing the substrate (100) to a component (112).

12. The method of claim 11, further comprising coupling a second coating layer (106) coupled to a second surface (105) of the reinforcement layer (104), wherein the second surface (105) is opposite from the first surface (103), and/or,
wherein the component (112) is within an internal cabin of an aircraft.

13. The method of claim 11 or claim 12, wherein the first coating layer (102) is a flame-retardant, ink-receptive coating, wherein the reinforcement layer (104) comprises fibers (107), and wherein the reinforcement layer (104) is flame-retardant, and/or,
wherein the first coating layer (102) comprises an intumescent material.

14. The method of claim 13, further comprising curing ink (109) of the print layer (108) comprises ink (109) with ultraviolet (UV) light (114).

15. An aircraft comprising:
an internal cabin;
a component (112) within the internal cabin;
a substrate (100) coupled to the component (112), the substrate (100) comprising:
a reinforcement layer (104) having a first surface (103) and a second surface (105) opposite from the first surface (103), wherein the reinforcement layer (104) comprises fibers (107), and wherein the reinforcement layer (104) is flame-retardant;
a first coating layer (102) coupled to the first surface (103) of the reinforcement layer (104), wherein the first coating layer (102) is a first flame-retardant, ink-receptive coating; and
a second coating layer (106) coupled to the second surface (105) of the reinforcement layer (104), wherein the second coating layer (106) is a second flame-retardant, ink-receptive coating; and
a print layer (108) coupled to the first coating layer (102), wherein the print layer (108) comprises ink (109) cured by ultraviolet (UV) light (114), and wherein the print layer (108) comprises a printed textured surface (110).
